# FASCICULE DE BREVET EUROPEEN

(11) **EP 2 234 704 B1**
(45) Date de publication et mention de la délivrance du brevet: **15.05.2013**
(21) Numéro de dépôt: 08871180.9
(22) Date de dépôt: 07.11.2008
(51) Int. Cl.: B01D 69/12, B01D 71/32, B05D 7/24, C08J 7/00, D06M 10/02, D06M 10/08, D06M 10/10, D06M 14/18

(54) **MEMBRANES IMPER-RESPIRANTES ET LEUR PROCEDE DE FABRICATION**
ATMUNGSAKTIVE MEMBRANEN UND IHR HERSTELLUNGSVERFAHREN
BREATHABLE MEMBRANES AND METHOD FOR MAKING SAME

(30) Priorité: 09.11.2007 FR 0707865
(43) Date de publication de la demande: 06.10.2010
(73) Titulaire: Hutchinson, 75008 Paris (FR)
(72) Inventeur: DIEUDONNÉ, Marie, F-45120 Chalette sur Loing (FR); DE DOMINICIS, Natacha, 92330 Sceaux (FR); SONNTAG, Philippe, F-77850 Hericy (FR)
(74) Mandataire: Corizzi, Valérie
(86) Numéro de dépôt international: PCT/FR2008/001577
(87) Numéro de publication internationale: WO 2009/092922

(56) Documents cités:
- EP-A- 0 523 806
- WO-A-00/20130
- WO-A-2005/089961
- C.-M. CHAN, T.-M. KO & H. HIRAOKA: "Polymer surface modification by plasmas and photons" SURFACE SCIENCE REPORTS, vol. 24, 1996, pages 1-54, XP002482309 Amsterdam
- TESHIMA K ET AL: "Transparent ultra water-repellent poly(ethylene terephthalate) substrates fabricated by oxygen plasma treatment and subsequent hydrophobic coating" APPLIED SURFACE SCIENCE, ELSEVIER, AMSTERDAM, NL, vol. 244, no. 1-4, 15 mai 2005 (2005-05-15), pages 619-622, XP004841771 ISSN: 0169-4332 cité dans la demande
- COULSON SR; WOODWARD I; BADYAL JPS; BREWER SA & WILLIS C: "Super-repellant composite fluoropolymer surfaces" J. PHYS. CHEM. B, vol. 104, 2000, pages 8836-8840, XP002482414

## Description

L'invention a pour objet un nouveau procédé de modification de la surface d'une membrane, ce procédé permettant de conférer à cette membrane des propriétés de déperlance et d'imperméabilité à l'eau tout en conservant sa perméabilité à la vapeur d'eau et ses propriétés élastiques.

Elle a également pour objet les membranes obtenues grâce à ce procédé.

Pour différentes applications, telles que les vêtements de sport, les gants en caoutchouc, mais aussi les membranes de piles à combustible, les membranes d'ultrafiltration, on a besoin de films qui soient imperméables à l'eau à l'état liquide, mais qui soient perméables à la vapeur d'eau, notamment dans le cas d'articles vestimentaires, pour éviter l'accumulation de vapeur d'eau résultant de la transpiration. Les articles qui possèdent cette double propriété sont dits imper-respirants.

Deux procédés existent actuellement pour fabriquer des films imper-respirants : l'enduction et le laminage d'une membrane sur un tissu.

L'enduction est un enduit appliqué directement sur le tissu, qui obstrue les espaces entre les fils du tissage pour rendre le tissu imperméable. Pour préserver la respirabilité, on applique une pâte qui, après « cuisson », laisse apparaître des micropores par évaporation du solvant. La majorité des enductions microporeuses sont à base de polyuréthanes. Des exemples de tels films sont illustrés dans US-4,774,131 ; US-5,169,906 ; US-5,204,403 et US-5,461,122.

En ce qui concerne les membranes imper-respirantes, elles sont la plupart du temps supportées sur un matériau textile. Cela notamment à cause des faibles propriétés mécaniques des membranes imper-respirantes connues. En effet, elles doivent être fines (5 à 50 microns) pour conserver de bonnes propriétés de respirabilité. Il existe deux types de membranes imper-respirantes : hydrophile ou microporeuse. Une membrane microporeuse est constituée de micropores permettant le passage de la vapeur d'eau mais bloquant les gouttes d'eau. L'évacuation de l'humidité (transpiration) se fait par action physique. Tandis que dans les membranes hydrophiles, le transfert d'humidité se fait par un phénomène chimique. La membrane absorbe la vapeur d'eau et la rejette vers l'extérieur. Il faut dans ce cas amorcer la pompe : la membrane doit tout d'abord se gorger d'eau pour fonctionner. Dans les deux cas, c'est la différence de pression qui active l'évacuation de l'humidité. Un film microporeux a tendance à évacuer la vapeur d'eau plus vite mais ne transfère plus l'eau sous forme liquide.

Si les films de l'art antérieur ont des propriétés d'imperméabilité à l'eau et de perméabilité à la vapeur intéressantes, ils ont généralement un défaut majeur : de mauvaises propriétés mécaniques, et notamment une faible élasticité, de plus les membranes sont bien souvent collées sur les supports, ce qui ajoute d'autres problèmes comme un possible délaminage et limite d'autant les propriétés de respirabilité, la colle n'étant pas toujours suffisamment respirante.

Il subsiste donc le besoin d'un procédé qui permette d'obtenir des membranes imper-respirantes dotées de propriétés de déperlance satisfaisantes, qui soient également dotées d'une bonne élasticité sans modifier les propriétés mécaniques du support, ces caractéristiques étant en outre durables dans le temps.

Les membranes ayant ces propriétés sont obtenues grâce à un traitement plasma sur un support adapté, ce traitement permettant le dépôt d'une couche d'un polymère amorphe réticulé nanostructuré qui laisse passer la vapeur d'eau, qui est très hydrophobe et imperméable à l'eau sous forme liquide, et qui est élastique.

Un tel traitement peut être fait en exposant un précurseur (précurseur gazeux, liquide ou solide) à une source d'énergie afin de faire passer ce précurseur dans un état excité et produire des espèce ionisées qui vont se déposer sur le substrat. La production d'espèces ionisées peut être obtenue par traitement du précurseur par PECVD (dépôt chimique en phase vapeur provoqué par plasma), par LECVD (dépôt chimique en phase vapeur provoqué par laser), par PVD (dépôt physique en phase vapeur), par PVD réactive, par pulvérisation, ou par toute autre technique de dépôt plasma. Le mode de production d'espèces ionisées est préférentiellement le traitement PECVD RF (radiofréquence).

Il est connu de l'art antérieur de modifier une membrane polymère par un traitement par plasma de façon à lui conférer des propriétés d'hydrophilie ou d'hydrophobie attendues.

Le document WO 02/04083 décrit des membranes de polymère rendues hydrophiles par un traitement par plasma. S'il mentionne la possibilité de les rendre hydrophobes, il ne comporte aucune indication pratique à cet effet, pas plus qu'il ne mentionne la possibilité d'obtenir une membrane à la fois hydrophobe et perméable à la vapeur d'eau, ni la possibilité d'obtenir par ce procédé des membranes ayant de bonnes propriétés d'élasticité. Le procédé décrit est un traitement par un plasma de H₂O qui permet la formation d'agents oxydants (H⁺, O₂, O⁻, O₃⁻, H₃O⁺). Ces agents oxydants modifient la surface du support soumis à leur action pour le rendre hydrophile. Le substrat à traiter est placé en dehors du réacteur où se forme le plasma et est soumis à un flux issu du réacteur. Un tel procédé ne permet généralement pas de dépôt de couches de matière sur un substrat, mais provoque une modification des propriétés de ce substrat sous l'action des espèces ionisées.

Le document WO02/100928 décrit le dépôt d'un revêtement polymérique sur un matériau élastomère. Le procédé employé, qui comporte l'utilisation de faibles pressions, conduit à la formation de films continus, très fortement réticulés, non perméables à la vapeur d'eau.

Différentes méthodes de traitement plasma sont utilisées pour obtenir des surfaces dites ultrahydrophobes. Par exemple, Teshima, K. et al., Applied Surface Science, 2005, 244(1-4), p. 619-622, montrent que le traitement plasma de plaques de polyéthylène téréphtalate permet d'obtenir des surfaces ultrahydrophobes. Ce traitement en deux étapes, consiste d'abord à traiter la surface avec un plasma d'oxygène pour lui apporter une nanostructuration puis à traiter la surface ainsi obtenue par plasma (par PECVD - radiofréquence) avec un précurseur liquide organosiliconé pour apporter cette fois les groupements hydrophobes. Une autre méthode plus générale consiste à déposer par plasma microondes un mélange liquide : un organosilane, un organosilicone (Hozumi, A. and O. Takai, Thin Solid Films, 1997, 303(1-2), p. 222-225), ou encore de déposer par plasma un composé organosiliconé additionné à un autre gaz et ensuite de greffer par voie chimique des composés de type fluorosilane (Nakajima A. et al., Thin Solid Films, 2000, 376(1-2), p. 140-143 ; WU Y. et al., Thin Solid Films, 2004, 457(1), p. 122-127; Wu Y. et al., Thin Solid Films, 2002, 407(1-2), p. 45-49). Tous ces dépôts possèdent des angles de contact avec l'eau supérieurs à 140°. Ils nécessitent tous des temps de traitement en général très longs (> 15 minutes) et ne sont pas perméables à la vapeur d'eau.

Par rapport aux procédés de l'art antérieur, le procédé de l'invention est simple, il ne nécessite pas d'avoir recours à des étapes de réactions chimiques en plus du traitement d'ionisation des précurseurs, notamment du traitement plasma, il donne accès à des produits très hydrophobes mais le dépôt obtenu en lui-même est perméable aux gaz et notamment à la vapeur d'eau. Ce procédé est rapide et il donne un dépôt doté de propriétés élastiques. Les propriétés d'hydrophobie et de perméabilité à la vapeur d'eau sont conservées lors de l'étirement du support et après la cessation de la contrainte.

L'invention concerne un procédé de fabrication d'une membrane imper-respirante caractérisé en ce que :
(i) l'on utilise une couche support constituée d'un film ou d'une membrane en un matériau perméable aux gaz ;
(ii) éventuellement cette couche support est soumise sur au moins l'une de ses faces à au moins un traitement choisi parmi :
   - un traitement par plasma d'un gaz choisi parmi : l'argon, l'oxygène, l'hélium et leurs mélanges ;
   - un nettoyage chimique ;
(iii) le film ou la membrane issu de l'étape (i) ou de l'étape (ii) est soumis sur la même face à un traitement par un plasma d'un composé précurseur choisi parmi: un gaz hydrocarboné, un gaz fluorocarboné et les mélanges d'un gaz hydrocarboné et d'un gaz fluorocarboné ; un liquide fluorocarboné ; un solide fluorocarboné; le composé précurseur étant choisi de telle sorte que F/C<2 ;
(iv) le film ou la membrane issu de l'étape (iii) est soumis sur la même face à un traitement par un plasma d'un gaz fluorocarboné, ce gaz fluorocarboné étant choisi de telle sorte qu'il présente un rapport 2 ≤ F/C.

Les plasmas utilisés dans le procédé de l'invention sont préférentiellement des plasmas générés par une onde continue ou pulsée, de fréquence radiofréquence (13,56MHz), basse fréquence, micro-ondes ou par une cathode magnétron. Ils peuvent être issus du traitement d'un précurseur gazeux ou liquide par PECVD (dépôt chimique en phase vapeur provoqué par plasma), LECVD (dépôt chimique en phase vapeur provoqué par laser), ou d'un précurseur solide par PVD (dépôt physique en phase vapeur), par pulvérisation, ou par toute autre technique de dépôt plasma. La méthode de dépôt, préférée est le PECVD.

La couche support utilisée dans le procédé de l'invention peut être une membrane en matériau polymère, un matériau textile non-tissé, un matériau de fibres tissées ou tricotées, un matériau composite, c'est-à-dire un matériau à base de polymère et d'au moins un matériau choisi parmi les fibres naturelles et synthétiques, la cellulose et les dérivés cellulosiques. De préférence la couche support est constituée d'un non tissé ou d'une membrane en polymère ou en matériau composite. Une telle membrane peut comporter une couche adhésive respirante en surface.

Lorsque la couche support est une membrane en un matériau polymère ou en matériau composite, elle est avantageusement choisie parmi les matériaux perméables aux gaz et notamment à la vapeur d'eau. C'est le cas des membranes microporeuses hydrophiles qui laissent passer la vapeur d'eau par un mécanisme de diffusion moléculaire.

Parmi les membranes en matériau polymère ou composite, on peut citer notamment, les membranes en matériau élastomère, et les membranes issues d'un mélange de polymères dont au moins l'un des composants est un élastomère.

On peut citer notamment parmi les membranes microporeuses, les membranes en polyoléfine, en PTFE, en polyuréthane, en PES (polyéthersulfones), telles que décrites notamment dans US-4,833,026, US-5,908,690, EP-0 591 782.

On peut citer notamment parmi les membranes microperforées : film Transpore ® (3M), film microperfore OneVision ® (commercialise par Diatrace).

On peut citer notamment parmi les membranes hydrophiles : les polyesters modifiés, les polyamides modifiés, les biopolyesters (PHA : (polyhydroxy-alcanoate, PLA : acide polylactique).

Parmi les matériaux textiles non tissés on peut citer : des non-tissés à base de Vistamaxx ® (Exxon), des non-tissés Elaxus ® (Global Performance Fibers), le Curaflex ® et le Curastrain ® commercialisé par la société Albi Nonwoven.

Parmi les matériaux en fibres tissées ou tricotées on peut citer :les références 1148, 1144 et 3600 commercialisées par Tissages de l'Aigle.

Les matériaux utilisables selon l'invention comme support du dépôt sont des matériaux perméables aux gaz, de préférence ils sont perméables aux gaz polaires. L'invention concerne tout particulièrement les matériaux supports perméables à la vapeur d'eau. Avantageusement, les films ou membranes constituant le matériau support de l'invention ont une perméabilité à la vapeur d'eau supérieure ou égale à 250g vapeur d'eau/m²/j, mesurée suivant la norme ASTM E96 méthode B.

Avantageusement ils ont une bonne élasticité, et en particulier ils ont une déformation rémanente mesurée suivant la norme ISO 2285, après un allongement de 50%, inférieure ou égale à 10%.

D'une façon générale, tout film ou membrane d'un matériau satisfaisant ces deux propriétés constitue un support préféré pour la mise en oeuvre de l'invention. Ces films ou membranes peuvent être isotropes ou anisotropes.

Selon l'invention, on peut prévoir que la totalité de la couche support, ou une partie seulement, soit recouverte par le dépôt plasma.

Le procédé de l'invention est avantageusement mis en oeuvre dans un réacteur plasma direct, c'est-à-dire un réacteur plasma dans lequel le substrat est placé dans la chambre où se forment les espèces réactives, à la différence des procédés post-décharge dans lesquels le plasma est formé dans le réacteur puis acheminé vers le substrat sous forme d'un flux d'espèces ionisées.

Un réacteur plasma direct comprend habituellement :
- un système d'excitation, comprenant un générateur délivrant une onde électromagnétique,
- une chambre en aluminium comprenant une électrode et une contre-électrode. Une électrode est directement reliée au générateur, généralement la chambre sert de contre-électrode. La forme de l'électrode est adaptée en fonction du type de produit à traiter,
- un système de pompage.

Bien que toute méthode et tous moyens permettant d'engendrer un plasma gazeux puisse être utilisé pour la mise en oeuvre de l'invention, tels que ceux décrits ci-dessus, on choisit de préférence : un réacteur plasma direct radiofréquence.

Le traitement se fait habituellement à une température comprise entre 20 et 350°C, avantageusement entre 20 et 50°C.

Le traitement se fait habituellement à une pression comprise entre 0,05 et 10mbar, avantageusement entre 0,2 et 1mbar.

Selon le procédé de l'invention, plusieurs composés sont employés successivement pour générer un plasma qui modifie la surface de la membrane ou du film support.

L'étape (ii) est facultative. Elle est destinée à nettoyer la surface d'éventuelles impuretés et à produire une activation de surface qui notamment fait apparaître des radicaux en surface du substrat. En fonction de l'état de surface du support, elle peut être omise. Lorsque l'on procède à un nettoyage chimique, celui-ci peut consister en un traitement de la face du support à traiter par des solvants par exemple.

De préférence, selon l'invention, à l'étape (ii) la couche support est soumise à un traitement par plasma d'argon. Avantageusement pour la réalisation de cette étape la puissance P est proportionnelle à la surface utile de la cathode. La puissance P est avantageusement comprise entre 0,1 et 2 W/cm². A titre d'illustration, pour une électrode de 20 cm x 20 cm, on emploie une puissance comprise entre 50 et 250 W. La puissance est adaptée en fonction de la nature du substrat. Avantageusement pour la réalisation de cette étape la durée de traitement t est comprise entre 50 et 150 s et le débit de gaz Q est fonction du volume de la chambre et la pression est comprise entre 0,3 et 0,6 mbars.

Parmi les gaz susceptibles d'être employés à l'étape (iii) on peut citer les alcanes en C₁-C₁₀, les alcènes en C₂-C₁₀, les alcynes en C₂-C₁₀, les fluoroalcanes en C₁-C₁₀, les fluoroalcènes en C₁-C₁₀, les gaz fluorés et soufrés, comme par exemple C₂H₂, CF₄, CH₄, CHF₃, C₃F₈, SF₆. Avantageusement le gaz employé à l'étape (iii) est un mélange de C₂H₂ et de CF₄. Avantageusement le gaz ou le mélange gazeux employé à l'étape (üi) est un mélange de C₂H₂ et de CF₄ avec un rapport volumique 2≤C₂H₂ / CF₄≤5.

Parmi les liquides susceptibles d'être utilisés comme précurseur à l'étape (iii), on peut citer les fluoroacrylates et les fluorométhacrylates.

Parmi les solides susceptibles d'être utilisés comme précurseur à l'étape (iii), on peut citer: le PTFE (Polytétrafluoroéthylène), l'ETFE (éthylène tétrafluoroéthylène), PVF (polyfluorure de vinyle), PVDF (polyfluorure de vinylidène), FEP (fluoro éthylène propylène), PFA (perfluoralkoxy copolymère).

Avantageusement pour la réalisation de cette étape, la puissance P est proportionnelle à la surface utile de la cathode. La puissance P est avantageusement comprise entre 0,04 et 2 W/cm². La durée de traitement t est comprise entre 30 et 150 s, et le débit de gaz Q est fonction du volume de la chambre et la pression est comprise entre 0,1 et 0,4 mbars.

Avantageusement, les gaz employés à l'étape (iv) ont un rapport F/C supérieur ou égal à 2. Parmi les gaz susceptibles d'être employés à l'étape (iv) on peut citer CF₄, CHF₃, C₃F₈. Préférentiellement, on choisit CF₄. Avantageusement à cette étape la puissance P est proportionnelle à la surface utile de la cathode. La puissance P est avantageusement comprise entre 0,2 et 3 W/cm². La durée de traitement t est comprise entre 50 et 300 s, de préférence entre 140 et 190s et le débit de gaz Q est fonction du volume de la chambre et la pression est comprise entre 0,25 et 0,6 mbars. Cette étape permet la structuration et la fluoration de la couche précédemment déposée. Elle rend le produit à la fois hydrophobe et déperlant.

Un autre objet de l'invention est constitué par une membrane susceptible d'être obtenue par le procédé de l'invention, membrane qui se distingue par le fait qu'elle est imper-respirante.

Les membranes ayant ces propriétés sont obtenues grâce à un traitement d'un support, ce traitement permettant le dépôt d'une couche d'un polymère amorphe réticulé nanostructuré qui laisse passer la vapeur d'eau, qui est déperlant, imperméable à l'eau sous forme liquide et qui est élastique.

Une couche de polymère nanostructurée est constituée :
- d'un assemblage ou agrégat de particules de taille nanométrique liées entre elles par des liaisons covalentes et/ou de type Van Der Waals, cet assemblage formant une couche plus ou moins poreuse en fonction de la densité de "compactage" de ces particules,
   ou
- d'un réseau polymérique nanoporeux, c'est-à-dire doté de pores de taille nanométrique.

Une telle membrane comporte au moins une couche support sous forme d'une membrane ou d'un film tels que décrits ci-dessus et au moins une couche d'un dépôt plasma constitué d'un polymère amorphe réticulé nanostructuré composé de C, H, F, éventuellement O, le rapport molaire C/F étant compris entre 1,5 et 2,5, cette couche comportant :
- des fonctions carbonées , et en particulier des fonctions choisies parmi : -CH₂-, -CH=CH-, -CH₃,
- des fonctions fluorées , et en particulier des fonctions choisies parmi : - CH₂F, CF₃-CF₂,-CF=CF-, -FC=CF₂, -HC=CF₂,
- éventuellement des fonctions carbonyles (-C=O).

Cette couche peut être sous forme de nanoparticules de taille comprise entre 10 et 500 nm de préférence entre 50 et 150 nm. Ces nanoparticules sont assemblées entre elles ou non et forment un film poreux avec des tailles de pores allant de 10 à 200 nm, préférentiellement de 20 à 100 nm. Elle peut être sous forme d'un film de polymère nanoporeux avec des tailles de pores allant de 10 à 200 nm, préférentiellement de 20 à 100 nm. La couche est liée au substrat par des liaisons covalentes et/ou ioniques et/ou de Van Der Waals. L'épaisseur de la couche peut aller de 20 à 1 000 nm, avantageusement de 40 à 100 nm.

Les membranes de l'invention ont l'avantage d'être imperméables à l'eau, perméables à la vapeur d'eau, d'être dotées de propriétés de déperlance, d'être élastiques et d'être dotées d'une bonne résistance à l'abrasion.

Par élasticité, on entend la propriété d'être déformable sous l'effet d'une contrainte mécanique et de reprendre sa forme initiale lorsque cette contrainte mécanique cesse.

Par déperlance on entend la capacité des gouttelettes à glisser sur un support sans y pénétrer.

Les membranes obtenues par le procédé de l'invention présentent avantageusement au moins l'une, et de préférence plusieurs, des caractéristiques suivantes :
- Angle de contact : Le dépôt tel que décrit est ultra-hydrophobe c'est-à-dire que l'eau en contact avec ce dépôt forme un angle supérieur à 140°.
- Déperlance : Déperlance de catégorie 5 évaluée à l'aide de la norme ISO4920.
- Frottement : Résistance à l'abrasion / diminution du frottement (plus de glissement).
- Respirabilité : la respirabilité de la membrane de l'invention est mesurée suivant la norme ASTM E96 méthode B : Le dépôt selon l'invention ne modifie en aucun cas la perméabilité à la vapeur d'eau du matériau sur lequel il a été déposé.
- Imperméabilité : L'imperméabilité à l'eau est mesurée suivant la norme ISO811. Une membrane est dite imperméable à l'eau si elle résiste à plus de 100 cm d'eau (en général les membranes imper-respirantes résistent à plus de 800 à 1000 cm d'eau). Le dépôt d'une couche plasma de l'invention améliore significativement la résistance à l'eau de la couche support.
- Elasticité du dépôt : Le dépôt plasma conserve ses propriétés de perméabilité aux gaz, notamment à la vapeur d'eau, et d'imperméabilité à l'eau, jusqu'à des allongements <300% (pour des substrats type NBR). Les produits de l'art antérieur ne possèdent qu'une élasticité limitée à quelques dizaines de pourcent en raison de leur nature continue. Le dépôt de l'invention possède une structure nanométrique qui lui permet de garder des propriétés ultra-hydrophobes et imperméables jusqu'à des taux d'allongement importants.

Les applications qui peuvent être faites des membranes de l'invention incluent notamment, et de façon non limitative, la fabrication de vêtements de protection, de membranes de piles combustibles et de membranes d'ultrafiltration.

### EXEMPLE :

### Matériel et méthode :

### Méthodes de mesure :

*Imperméabilité : -* Elle est mesurée par la résistance à la pénétration de l'eau selon la norme ISO811.
*Conservation de la déperlance en situation d'étirement : -* On utilise une table micrométrique (vitesse de déplacement de l'échantillon 6,25 mm/s et incrément de déplacement = 5 mm)
   - Taille de l'échantillon 35 mm x 32 mm avec une zone de référence d=10 mm. 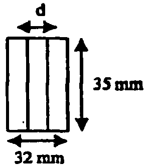
But : on suit l'augmentation de la distance d en fonction de l'ultra hydrobicité de la surface.
*Déperlance : Spray* Test : norme ISO4920

### Techniques analytiques :

- Analyse de la morphologie de surface et de la rugosité de surface :
   - Microscopie électronique à balayage : On a utilisé un appareil MEB-FEG Zeiss Supra 35 commercialisé par la société Zeiss.
   - Microscopie à force atomique : On a utilisé un appareil Nanoscope ® III commercialisé par la société Veeco.
- Epaisseur de la couche :
   - Mesurée par un profilomètre à stylet : On a utilisé un appareil Dektak®8 commercialisé par la société Veeco.
- Composition chimique de la couche
   - Spectroscopie photoélectronique à rayons X : On a utilisé un appareil X-Ray photoelectron spectrography (XPS) LHS12 commercialisé par la société Leybold.
   - Spectroscopie Infrarouge Spectroscopie à Transformée de Fourier : On a utilisé un appareil Nexus ® FT-IR commercialisé par la société Thermo Nicolet. Les spectres sont enregistrés entre 4000 et 500 cm⁻¹ et accumulés 100 fois avec une résolution de 4cm⁻¹.
- Propriétés de surface du dépôt :
   - Mesurée par les angles de contact de l'eau avec le dépôt. On a utilisé un appareil Contact Angle Measures System G10 commercialisé par la société Krüss. La super hydrophobicité est donnée par des mesures d'angles de contact par la technique de la goutte pendante. Une surface est ultra hydrophobe pour des angles de contact avec l'eau supérieurs à 140° : la goutte d'eau roule sur la surface du substrat

### Exemple 1 :

### A- Le réacteur plasma

Le réacteur plasma utilisé pour l'obtention de surfaces ultra-hydrophobes est décrit ci-dessous.

### a- Le système d'excitation

Le générateur est un modèle Dressler ® délivrant une puissance s'échelonnant entre 0 et 500 W et une onde électromagnétique (13,56 MHz). La puissance réfléchie est ajustée de manière à ce qu'elle soit minimale, à l'aide d'une boîte d'accord automatique.

### b- Le réacteur

Le réacteur est une chambre en aluminium de 35,5 cm de diamètre et de 39,5 cm de profondeur, possédant ainsi un volume de 50 litres. Il possède une plaque en aluminium (20 cm x 20 cm) servant de cathode, isolée du reste de la chambre par une plaque en téflon. La cathode est directement reliée au générateur et la chambre sert d'anode. Le plasma est crée entre l'anode et la cathode, son intensité variant avec la puissance et le débit. Ce réacteur est muni d'une fenêtre optique.

### c- Le groupe de pompage_

Le système de pompage est constitué d'une pompe primaire EDWARDS ® bi-étagée de 40 m³/h. Deux types de jauges sont présentes sur ce réacteur : une jauge piézoélectrique de contrôle et une jauge capacitive de procédé (INSTRON ®) travaillant respectivement sur une échelle de pression allant de 0 à 1 bar et de 0 à 1 torr. Le flux de gaz (Q) est contrôlé par un débitmètre BRUKKER ®. Le débit affiché est exprimé en %. Le débit et la pression sont des paramètres liés : la pression varie faiblement avec le débit.

Quatre paramètres à optimiser conditionnent la modification superficielle du matériau exposé au plasma : la puissance d'excitation (P en W), la durée du traitement (t en secondes) la pression (en mbars) et le débit de gaz (Q en sccm).

On utilise comme substrat un film en microfibres 5 cm x 5 cm de Polyester/Polypropylene non tissées (Miracloth ® de DAIWABO) non traité. On a également fait des essais sur une membrane Alpex ® 07I24A en polyamide et élasthanne comprenant un film en polyuréthane comme membrane imper-respirante, commercialisée par la société Tissages de Quintenas.

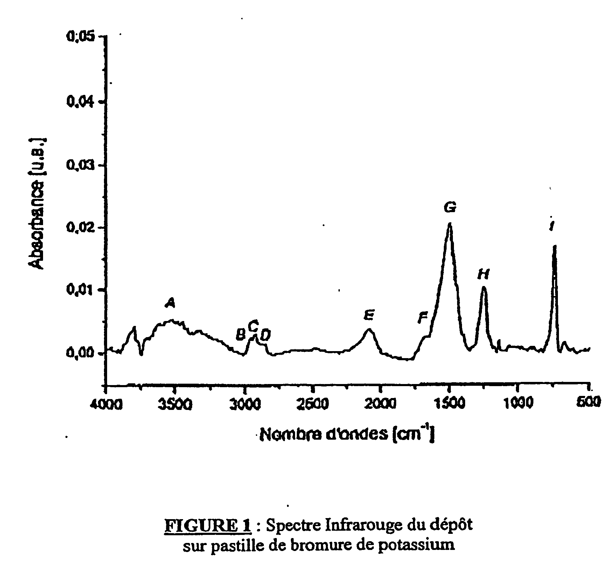

On suit le protocole suivant :
- Le film est soumis sur une de ses faces à un traitement par un plasma d'argon à une puissance P de 200 W, pendant une durée t de 120 s, le débit de gaz Q est de 75 sccm et la pression de 0,45mbars;
- La membrane issue de cette première étape est soumise sur la même face à un traitement par un plasma de C₂H₂ et CF₄ à une puissance P de 100 W, pendant une durée t de 50 s, le débit de gaz Q est de 30 sccm (C₂H₂)/13 sccm (CF₄) et la pression est de 0,2mbars;
- La membrane issue de cette étape est soumise sur la même face à un traitement par un plasma de CF₄ à une puissance P de 300 W, pendant une durée t de 170 s, le débit de gaz Q est de 72 sccm et la pression est de 0,4mbars;
- Le dépôt obtenu est analysé en infra rouge à transformée de Fourier : le spectre résultant est illustré sur la figure 1. Les pics observés sont détaillés dans le tableau 1 ci-dessous.

**Tableau 1 : Attribution des pics IR**

| **Référence des pics** | **Nombre d'ondes (cm⁻¹)** | **Attribution des pics** |
|---|---|---|
| A | 3635 | Elongation des OH de H₂O |
| B | 2956 | Elongation asymétrique des CH₃ |
| C | 2924 | Elongation asymétrique des CH₃ |
| D | 2854 | Elongation asymétrique des CH₃ |
| E | 2099 | Elongation des C=C, R-C=CH |
| F | 1674 | Elongation de C=O |
| G | 1487 | Elongation des C=C aromatiques |
| H | 1251 | Elongation des C-F |
| I | 1050 | Elongation des CH₂-F |
| J | 876 | Rocking CH₂ des CH₂-F |
| K | 482 | Rocking CF des CF₃COO |

### Analyse détaillée XPS

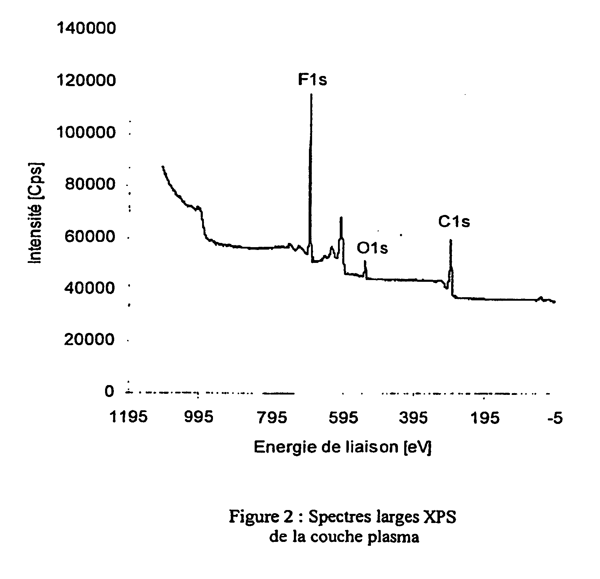

Le dépôt est constitué de carbone (C), de fluor (F) et d'oxygène (O). Le spectre large de la couche est montré sur la figure 2 (dépôt réalisé sur des plaques de silicium).

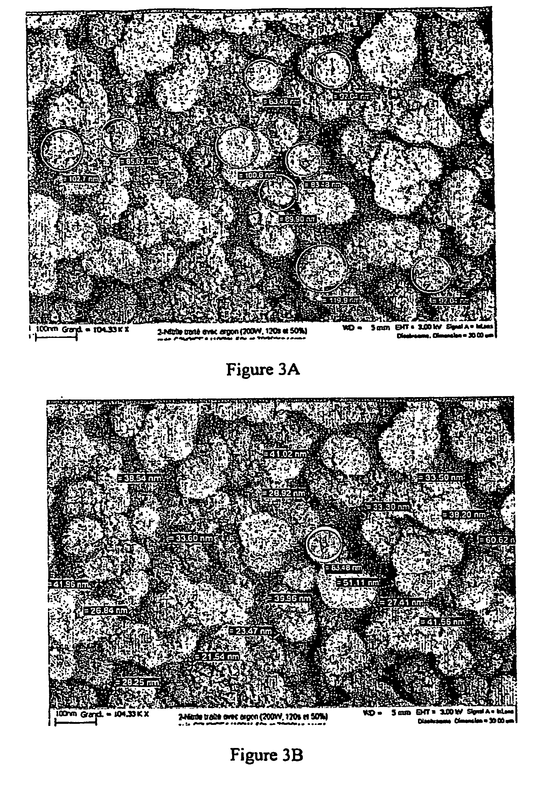

Cette couche est composée à hauteur de (63±5)% de carbone, (31,3±5) de fluor et (5,5±5) d'oxygène. Cette couche est composée essentiellement des liaisons suivantes (Figures 3) : CF₂-CF₂ (292,7 eV) relatives à la structure type Téflon contribuant à l'ultra-hydrophobicité du dépôt, CF-CFₙ (290,5 eV), CF (287,3 eV) et C=CFₙ (285,8 eV).

### Mesure des rugosités de surface

La rugosité de surface (Ra) a été obtenue à partir de scans d'images de (50 µm x 50 µm). Chaque valeur est une valeur moyenne de 8 scans (pour une fenêtre 25 µm x 25 µm). La variation des rugosités de surface en fonction du traitement plasma est donnée dans le Tableau 2. Le dépôt plasma ultra-hydrophobe a une rugosité de surface de 139 nm, soit une rugosité de surface plus importante que celle du substrat servant de témoin.

**Tableau 2 : variation de la rugosité en fonction du traitement (substrat film nitrile)**

| **Matériau** | **Rugosité de surface (nm)** |
|---|---|
| Substrat témoin | 77 ± 21 |
| Substrat témoin + dépôt | 139 ± 34 |

### Nanostructure :

La structure nanoporeuse du dépôt peut être visualisée à l'aide de photos microélectroniques comme représenté sur les figures 3A et 3B.

La membrane obtenue possède les propriétés suivantes :
- Respirabilité (Perméabilité à la vapeur d'eau) :
La perméabilité à la vapeur d'eau est mesurée suivant la norme ASTM E96B, à 23°C et 50% d'humidité. Les résultats sont exposés dans le tableau 3 :

**Tableau 3**

| **Substrat** | **Perméabilité (g/m2:24h)** |
|---|---|
| Film substrat Miracloth ® | 937±32 |
| Film revêtu du traitement plasma | 880±26 |
| Membrane ALPEX ® 07 I24A (polyamide 85%/polyurethane 10%/élasthanne 5%) (membrane imper-respirante comprenant un film PU) | 638±7 |

- Déperlance
Mesurée suivant la norme ISO 4920 :

| **Substrat** | **Déperlance** |
|---|---|
| Film substrat Miracloth ® | 3 |
| Film revêtu du traitement plasma | 5 |

### Exemple 2 :

On utilise comme substrat une membrane en caoutchouc NBR (nitrile butyle)

### a - Composition

| | Parts en poids sec | Concentration des dispersions (%) |
|---|---|---|
| Latex de NBR carboxylé (***) | 100 | 48 |
| Hydroxyde de potassium | 0,5 | 5,0 |
| Oxyde de zinc | 1,5 | 53,4 |
| soufre | 0,85 | 50,4 |
| ZMBT (****) | 0,3 | 49,0 |
| Hydroxyéthylcellulose (*) | 20 | 10 |
| Résine mélamine-formol (**) | 2 | 63 |
| NH₄Cl | 0,2 | 30 |

| | | |
|---|---|---|
| (*) Commercialisé par la société HERCULES sous la référence NATROSOL 250LR (**) Commercialisé par la société SYNTHRON sous la référence PROXM3M (***) NBR = caoutchouc butadiène acrylonitrile (****) ZMBT = 2-mercapto benzothiazole de zinc. Teneur en matière sèche de la composition = 29% | | |

### - Etapes du procédé

On réalise un film par trempage d'une forme dans la composition décrite ci-dessus. Le trempage est effectué une seule fois. Puis le film est séché par chauffage à 50°C puis vulcanisé à 170°C. On obtient une membrane ayant une épaisseur de 60 microns.

### b- Le système d'excitation

Le générateur est un modèle Dressler délivrant une puissance s'échelonnant entre 0 et 1000 W et une onde électromagnétique (13,56 MHz). La puissance réfléchie est ajustée de manière à ce qu'elle soit minimale, à l'aide d'une boîte d'accord automatique. Possibilité d'utilisation en mode pulsé.

### c- Le réacteur

Le réacteur est une chambre en aluminium de 40 cm de diamètre et de 40 cm de profondeur, possédant ainsi un volume de 50 litres. La cathode a pour dimension 20 cm x 30 cm, la chambre sert de contre-électrode (d'anode). Ce réacteur est muni d'une fenêtre optique.

### d- Le groupe de pompage

Le système de pompage est constitué d'une pompe primaire EDWARDS ® bi-étagée de 40 m³/h et d'une pompe Roots ® 250m³/h. Deux types de jauges sont présentes sur ce réacteur : une jauge piézoélectrique de contrôle et une jauge capacitive de procédé (INSTRON ®) travaillant respectivement sur une échelle de pression allant de 0 à 1 bar et de 0 à 1 torr. Le flux de gaz (Q) est contrôlé par un débitmètre BRUKKER ®. Le débit affiché est exprimé en %. Le débit et la pression sont des paramètres liés : la pression varie faiblement avec le débit

On suit le protocole suivant :
- La membrane est soumise sur une de ses faces à un traitement par un plasma d'argon à une puissance P de 200 W, pendant une durée t de 120 s, le débit de gaz Q est de 75 sccm et la pression de 0,4 mbars ;
- La membrane issue de cette première étape est soumise sur la même face à un traitement par un plasma de C₂H₂ et CF₄ à une puissance P de 100. W, pendant une durée t de 50 s, le débit de gaz Q est de 30 sccm en C₂H₂ et 13 sccm en CF₄. Le système d'excitation est en mode pulsé : fréquence = 1Hz et rapport cyclique 90% ;
- La membrane issue de cette étape est soumise sur la même face à un traitement par un plasma de CF₄ à une puissance P de 300 W, pendant une durée t de 170 s, le débit de gaz Q est de 70 sccm et la pression de 0,4 mbars;

La membrane résultant de ce protocole est dotée d'une très bonne élasticité (>250%) et, en outre, elle conserve ses propriétés d'hydrophobie et de perméabilité à la vapeur d'eau à un allongement de 250%.

### Résultats :

Angles de contact : L'hydrophobicité (donnée par la mesure de l'angle de contact de l'eau avec la surface) est donnée dans le Tableau 4.

**Tableau 4 : Angle de contact avec l'eau**

| **Matériau** | **Angle de contact avec l'eau** |
|---|---|
| Film extensible non traité | 62,6 ± 3,6 |
| Film extensible + traitement | > 140 |

### Respirabilité du matériau

Elle est donnée dans le tableau 5.

**Tableau 5**

| **Substrat** | **Perméabilité (g/m²:24h)** |
|---|---|
| Film substrat NBR | 590 + 30 |
| Film revêtu du traitement plasma | 580 + 30 |

Exemple 3 :

Mesure des angles de contact après différents traitements par plasma :
Témoin : latex NBR (de composition telle que définie dans l'exemple 2)
Echantillon 1 (comparatif) :Témoin + traitement par un plasma d'argon à une puissance P de 200 W, pendant une durée t de 120 s, le débit de gaz Q est de 75 sccm et la pression de 0,4 mbars + Traitement plasma CF₄ : puissance P de 300 W, pendant une durée t de 170 s, le débit de gaz Q est de 70 sccm et la pression de 0,4 mbars
Echantillon 2 (comparatif) : Témoin + traitement par un plasma d'argon à une puissance P de 200 W, pendant une durée t de 120 s, le débit de gaz Q est de 75 sccm et la pression de 0,4 mbars + traitement par un plasma de C₂H₂ et CF₄ à une puissance P de 100 W, pendant une durée t de 50 s, le débit de gaz Q est de 30 sccm en C₂H₂ et 13 sccm en CF₄. Le système d'excitation est en mode pulsé : fréquence = 1Hz et rapport cyclique 90%
Echantillon 3 (selon l'invention) : Témoin + traitement par un plasma d'argon à une puissance P de 200 W, pendant une durée t de 120 s, le débit de gaz Q est de 75 sccm et la pression de 0,4 mbars + traitement par un plasma de C₂H₂ et CF₄ à une puissance P de 100 W, pendant une durée t de 50 s, le débit de gaz Q est de 30 sccm en C₂H₂ et 13 sccm en CF₄. Le système d'excitation est en mode pulsé : fréquence = 1Hz et rapport cyclique 90% + Traitement plasma CF₄ : puissance P de 300 W, pendant une durée t de 170 s, le débit de gaz Q est de 70 sccm et la pression de 0,4 mbars

Résultats :

| | Témoin | Echantillon 1 | Echantillon 2 | Echantillon 3 |
|---|---|---|---|---|
| Angle de contact avec l'eau (°) | La goutte s'étale | 90° | 140° juste après dépôt mais le traitement n'est pas permanent (90° après une très faible abrasion) | > 140° et le traitement est permanent |

## Revendications

1. Procédé de fabrication d'une membrane **caractérisé en ce que** :
(i) l'on utilise une couche support constituée d'un film ou d'une membrane en un matériau perméable aux gaz ;
(ii) éventuellement cette couche support est soumise sur au moins l'une de ses faces à au moins un traitement choisi parmi :
- un traitement par plasma d'un gaz choisi parmi : l'argon, l'oxygène, l'hélium et leurs mélanges ;
- un nettoyage chimique ;
(iii) le film ou la membrane issu de l'étape (i) ou de l'étape (ii) est soumis sur la même face à un traitement par un plasma d'un composé précurseur choisi parmi : un gaz hydrocarboné, un gaz fluorocarboné et les mélanges d'un gaz hydrocarboné et d'un gaz fluorocarboné ; un liquide fluorocarboné ; un solide fluorocarboné; le composé précurseur étant choisi de telle sorte que F/C<2 ;
(iv) le film ou la membrane issu de l'étape (iii) est soumis sur la même face à un traitement par un plasma d'un gaz fluorocarboné, ce gaz fluorocarboné étant choisi de telle sorte qu'il présente un rapport 2 ≤ F/C.

2. Procédé selon la revendication 1, dans lequel les plasmas sont des plasmas générés par une onde de fréquence radiofréquence.

3. Procédé selon la revendication 1 ou la revendication 2, dans lequel les plasmas sont issus du traitement d'un précurseur par PECVD.

4. Procédé selon l'une quelconque des revendications précédentes, dans lequel la couche support est choisie parmi : une membrane en matériau polymère, un matériau textile non-tissé, un matériau de fibres tissées ou tricotées, un matériau composite à base de polymère et d'au moins un matériau choisi parmi les fibres naturelles et synthétiques, la cellulose et les dérivés cellulosiques.

5. Procédé selon l'une quelconque des revendications précédentes, dans lequel la couche support est choisie parmi : les membranes en matériau élastomère, et les membranes issues d'un mélange de polymères dont au moins l'un des composants est un élastomère.

6. Procédé selon l'une quelconque des revendications précédentes, dans lequel la couche support est choisie parmi les films ou membranes qui ont une perméabilité à la vapeur d'eau supérieure ou égale à 250g vapeur d'eau/m²/j, mesurée suivant la norme ASTM E96 méthode B.

7. Procédé selon l'une quelconque des revendications précédentes, dans lequel la couche support est choisie parmi les films ou membranes qui ont une déformation
rémanente après allongement de 50%, mesurée suivant la norme ISO 2285, inférieure ou égale à 10%.

8. Procédé selon l'une quelconque des revendications précédentes, dans lequel à l'étape (ii) la couche support est soumise à un traitement par plasma d'argon, la puissance P est comprise entre 0,1 et 2 W/cm² de surface utile d'électrode.

9. Procédé selon l'une quelconque des revendications précédentes, dans lequel à l'étape (iii) le gaz employé est un mélange de C₂H₂ et de CF₄, la puissance P est comprise entre 0,04 et 2 W/cm² de surface utile de la cathode

10. Procédé selon l'une quelconque des revendications précédentes, dans lequel à l'étape (iii) le gaz ou le mélange gazeux est un mélange de C₂H₂ et de CF₄ avec un rapport volumique 2≤C₂H₂ / CF₄≤5.

11. Procédé selon l'une quelconque des revendications précédentes, dans lequel à l'étape (iv) le gaz est CF₄ et la puissance P est comprise entre 0,2 et 3 W/cm² de surface utile de la cathode.

12. Membrane susceptible d'être obtenue par le procédé selon l'une quelconque des revendications précédentes, **caractérisée en ce qu'**elle comporte une couche support sous forme d'une membrane ou d'un film en un matériau perméable aux gaz et au moins une couche d'un dépôt constitué d'un polymère amorphe réticulé nanostructuré composé de C, H, F, éventuellement O, le rapport molaire C/F étant compris entre 1,5 et 2,5, cette couche comportant des fonctions carbonées, des fonctions fluorées, et éventuellement des fonctions carbonyles.

13. Membrane selon la revendication 12, dans laquelle la couche de dépôt est sous forme de nanoparticules de taille comprise entre 10 et 500 nm, de préférence entre 50 et 150 nm.

14. Membrane selon la revendication 12 ou la revendication 13, dans laquelle la couche de dépôt forme un film poreux avec des tailles de pores allant de 10 à 200 nm, préférentiellement de 20 à 100 nm.

15. Membrane selon l'une quelconque des revendications 12 à 14 précédentes, dans laquelle l'épaisseur de la couche de dépôt est comprise entre 20 et 1 000 nm, avantageusement 40 à 100 nm.

## Patentansprüche

1. Verfahren zur Herstellung einer Membran,
**dadurch gekennzeichnet, dass**
(i) eine Trägerschicht verwendet wird, die aus einem Film oder einer Membran aus einem gasdurchlässigen Material besteht;
(ii) die Trägerschicht gegebenenfalls auf mindestens einer ihrer Seiten mindestens einer Behandlung unterzogen wird, ausgewählt aus
- einer Plasmabehandlung mit einem Gas ausgewählt aus Argon, Sauerstoff, Helium und deren Gemischen;
- einer chemischen Reinigung;
(iii) der Film oder die Membran aus Schritt (i) oder Schritt (ii) auf derselben Seite einer Plasmabehandlung mit einer Präkursorverbindung unterzogen wird, ausgewählt aus einem Kohlenwasserstoffgas, einem Fluorkohlenstoffgas und Gemischen aus einem Kohlenwasserstoffgas und einem Fluorkohlenstoffgas, einer Fluorkohlenstoff-Flüssigkeit und einem Fluorkohlenstoff-Feststoff, wobei die Präkursorverbindung derart ausgewählt ist, dass F/C < 2;
(iv) der Film oder die Membran aus Schritt (iii) auf derselben Seite einer Plasmabehandlung mit einem Fluorkohlenstoffgas unterzogen wird, wobei das Fluorkohlenstoffgas derart ausgewählt ist, dass es ein Verhältnis von 2 ≤ F/C aufweist.

2. Verfahren nach Anspruch 1, wobei es sich bei den Plasmas um Plasmas handelt, die durch eine Radiofrequenzwelle erzeugt wurden.

3. Verfahren nach Anspruch 1 oder 2, wobei die Plasmas aus der Behandlung eines Präkursoren mittels PECVD hervorgegangen sind.

4. Verfahren nach einem der vorhergehenden Ansprüche, wobei die Trägerschicht ausgewählt ist aus einer Membran aus einem Polymermaterial, einem Vliesmaterial, einem Material aus gewebten oder gestrickten Fasern, einem Verbundmaterial auf Polymerbasis und auf Basis mindestens eines Materials ausgewählt aus Naturfasern und synthetischen Fasern, Zellulose und Zellulosederivaten.

5. Verfahren nach einem der vorhergehenden Ansprüche, wobei die Trägerschicht ausgewählt ist aus Membranen aus einem Elastomermaterial und Membranen, die aus einem Polymergemisch hervorgegangen sind, zu dessen Bestandteilen mindestens ein Elastomer gehört,

6. Verfahren nach einem der vorhergehenden Ansprüche, wobei die Trägerschicht aus Filmen oder Membranen ausgewählt ist, deren Wasserdampfdurchlässigkeit größer oder gleich 250g Wasserdampf/m²/d ist, gemessen nach der ASTM-Norm E96, Verfahren B.

7. Verfahren nach einem der vorhergehenden Ansprüche, wobei die Trägerschicht aus Filmen oder Membranen ausgewählt ist, die eine bleibende 50%-Dehnung von kleiner oder gleich 10% aufweisen, gemessen nach der Norm ISO 2285.

8. Verfahren nach einem der vorhergehenden Ansprüche, wobei in Schritt (ii) die Trägerschicht einer Plasmabehandlung mit Argon unterzogen wird und die Leistungsdichte P zwischen 0,1 und 2 W/cm² der Elektrodennutzfläche liegt.

9. Verfahren nach einem der vorhergehenden Ansprüche, wobei in Schritt (iii) das verwendete Gas ein Gemisch aus C₂H₂ und CF₄ ist und die Leistungsdichte P zwischen 0,04 und 2 W/cm² der Kathodermutzfläche liegt.

10. Verfahren nach einem der vorhergehenden Ansprüche, wobei in Schritt (iii) das Gas oder Gasgemisch ein Gemisch aus C₂H₂ und CF₄ mit einem Volumenverhältnis von 2 ≤ C₂H₂ / CF₄ ≤ 5 ist.

11. Verfahren nach einem der vorhergehenden Ansprüche, wobei in Schritt (iv) das Gas CF₄ ist und die Leistungsdichte P zwischen 0,2 und 3 W/cm² der Kathodennutzfläche liegt.

12. Membran, erhältlich durch das Verfahren nach einem der vorhergehenden Anspruche,
**dadurch gekennzeichnet, dass**
sie eine Trägerschicht in Form einer Membran oder eines Films aus einem gasdurchlässigen Material und mindestens eine Lage einer Beschichtung aus einem amorphen, vernetzten, nanostrukturierten Polymer bestehend aus C, H, F und gegebenenfalls 0 aufweist, wobei das Molverhältnis C/F zwischen 1,5 und 2,5 liegt und die Lage Kohlenstoffunktionen, Fluorfunktionen und gegebenenfalls Carbonylfunktionen umfasst.

13. Membran nach Anspruch 12, wobei die Beschichtungslage in Form von Nanopartikeln mit einer Größe zwischen 10 und 500 nm, vorzugsweise zwischen 50 und 150 nm, vorliegt.

14. Membran nach Anspruch 12 oder 13, wobei die Beschichtungslage einen porösen Film mit Porengrößen im Bereich von 10 bis 200 nm, vorzugsweise 20 bis 100 nm, bildet.

15. Membran nach einem der vorhergehenden Ansprüche 12 bis 14, wobei die Dicke der Beschichtungslage zwischen 20 und 1000 nm, vorzugsweise zwischen 40 und 100 nm, liegt.

## Claims

1. A method of manufacture of a membrane **characterized in that**:
(i) a support layer formed by a film or a membrane of gas-permeable material is used,
(ii) at least one of the surfaces of said support layer may be subject to a treatment selected from among:
- a treatment by plasma of a gas selected from among argon, oxygen, helium and their mixtures,
- chemical cleaning,
(iii) the same surface of the film or the membrane resulting from stage (i) or stage (ii) is subject to a treatment by a plasma of a precursor compound selected from among a hydrocarbonated gas, a fluorocarbonated gas and the mixtures of a hydrocarbonated gas and a fluorocarbonated gas, a fluorocarbonated liquid, a fluorocarbonated solid, the precursor compound being selected such that F/C < 2,
(iv) the same surface of the film or the membrane resulting from stage (iii) is subject to a treatment by a plasma of a fluorocarbonated gas, said fluorocarbonated gas being selected such that it has a ratio 2 ≤ F/C.

2. A method according to claim 1, wherein the plasmas are plasmas generated by a frequency wave of radiofrequency.

3. A method according to claim 1 or claim 2, wherein the plasmas result from the treatment of a precursor by PECVD.

4. A method according to any one of the preceding claims, wherein the support layer is selected from among a membrane of polymer material, a non-woven textile material, a woven or knitted fibre material, a composite polymer-based material and at least a material selected from among natural and synthetic fibres, cellulose and cellulose derivatives.

5. A method according to any one of the preceding claims, wherein the support layer is selected from among membranes of elastomer material and the membranes resulting from a mixture of polymers at least one of the components of which is an elastomer.

6. A method according to any one of the preceding claims, wherein the support layer is selected from among the films or membranes which have a water vapour permeability equal to or greater than 250 g water vapour/m²/day, measured according to standard ASTM E96 method B.

7. A method according to any one of the preceding claims, wherein the support layer is selected from among the films or membranes which have a residual deformation after elongation of 50%, measured according to standard ISO 2285, equal to or less than 10%.

8. A method according to any one of the preceding claims, wherein in stage (ii) the support layer is subject to a treatment by argon plasma, the power P being between 0.1 and 2 W/cm² of electrode working surface.

9. A method according to any one of the preceding claims, wherein in stage (iii) the gas used is a mixture of C₂H₂ and CF₄, the power P being between 0.04 and 2 W/cm² of cathode working surface.

10. A method according to any one of the preceding claims, wherein in stage (iii) the gas or the gaseous mixture is a mixture of C₂H₂ and CF₄ with a volume ratio 2≤C₂H₂ / CF₄≤5.

11. A method according to any one of the preceding claims, wherein in stage (iv) the gas is CF₄ and the power P is between 0.2 and 3 W/cm² of cathode working surface.

12. A membrane which may be obtained by the method according to any one of the preceding claims, **characterized in that** it comprises a support layer in the form of a film or a membrane of a gas-permeable material and at least one layer of a deposit formed by a composite nano-structured reticulated amorphous polymer composed of C, H, F and possibly O, the C/F molar ratio being between 1.5 and 2.5, said layer comprising carbonated functions, fluorinated functions and possibly carbonyl functions.

13. A membrane according to claim 12, wherein the deposit layer is in the form of nanoparticles of a size of between 10 and 500 nm, and preferably between 50 and 150 nm.

14. A membrane according to claim 12 or claim 13, wherein the deposit layer forms a porous film with pore sizes ranging from 10 to 200 nm, and preferably from 20 to 100 nm.

15. A membrane according to any one of the preceding claims 12 to 14, wherein the thickness of the deposit layer is between 20 and 1,000 nm, and advantageously between 40 and 100 nm.
